# EUROPEAN PATENT APPLICATION

(11) **EP 2 742 996 A1**
(43) Date of publication of application: **18.06.2014**
(21) Application number: 12197430.7
(22) Date of filing: 17.12.2012
(51) Int. Cl.: B01J 20/24, B01J 20/26, B01J 20/32, C02F 1/28

(54) **Sorbents and method for synthesis of sorbents intended for removal of radionuclides and toxic trace elements from water**

(71) Applicant: Latvijas Universitate, 1586 Riga (LV)
(72) Inventor: Klavins, Maris, LV-1026 Riga (LV); Abramenkovs, Andris, LV-1021 Riga (LV); Ansone, Linda, LV-3913 Iecavas novads (LV)
(74) Representative: Fortuna, Aleksandra

(57) **Abstract**

The invention relates to synthesis of sorbents for removal of radionuclides and toxic trace elements (e.g. heavy metals, no-metallic elements and metalloids) from waters. The offered method for synthesis of sorbents provides covering natural biomaterial structure acting as sorbent matrix with a layer of synthetic polymer containing functional groups by graft polymerization. The sorbent matrix is derived from peat, sawdust or straw.

## Description

### Technical Field

The invention is related to synthesis of sorbents for removal of radionuclides and toxic trace elements (e.g. heavy metals, no-metallic elements and metalloids) from waters.

### Background Art

Removal of radionuclides from aquatic solutions is a major technological and environmental challenge. Despite care, taken at treatment of radioactive materials, radionuclides might be formed during technological processing of ores, preparation of nuclear materials, processing of nuclear wastes. Usually large volumes of waste waters contaminated with radionuclides even at very low concentrations are formed. Another common problem is related to treatment of contaminated environment. Environmental contaminated with radionuclides might happen during accidents of nuclear power plants or other facilities where radioactive materials are used, leakages from radioactive material dumping sites, as contamination from historical operations of radioactive materials. In short, treatment of wastewaters containing radionuclides is a significant problem requiring novel technological solutions. Another issue of concern is removal of toxic trace elements like as heavy metals (Pb²⁺, Cd²⁺, Cr³⁺, Tl⁺ and others) or non-metallic elements (B, F, Se) or metalloids (As, Te, Sb). Also in this case exist a number of diverse sources, significant consequences (at first due to toxicity of mentioned elements) of environmental or technological contamination with such elements and widespread problems caused by presence of these elements in the environment. However a significant problem related to speciation forms of toxic trace elements as far as they might exist in cationic (positively charged) and anionic (negatively charged) ionic species, thus hampering their removal during electrostatic attraction.

There is known a method for a preparation of a larch tannin metal ion absorbing agent, using a self-assembly grafting polymerization technology (CN102205232). The larch tannin metal ion absorbing agent is synthesized by using larch tannin as a raw material, N,N'-methylenebisacrylamide (NMBA) as a crosslinking agent and potassium peroxydisulfate as an initiating agent through a self-assembly grafting polymerization technology. The preparation method comprises the steps of: firstly, adding an alkali solution of the larch tannin in a reactor, heating in water bath and introducing nitrogen, stirring; adding uniformly-stirred initiating agent, crosslinking agent, acrylic acid and acrylamide solution into the reactor for polymerization, and carrying out insulation, cooling and vacuum drying to obtain the larch tannin metal ion absorbing agent. The larch tannin metal ion absorbing agent prepared by adopting the method has the maximum removal rate of 86.1252 % to Cr⁶⁺. However this method use as initial material tannin an processed substance and acrilic acid as the initial monomer, thus supporting introduction of only carboxylic groups into the final sorbent.

There is also known the method for obtaining modified adsorbent of peat for heavy metal wastewater treatment (CN101007263), wherein natural peat is used as the main raw material. Alkaline solution is used to neutralize peat, the pH of mixed solution is adjusted to 10-12, then the solid-liquid ratio is adjusted to 1:1-1:100 with alkali solution, stirred, and stewed. The sediments are separated from the supernatant, dried and disintegrated said sediments. Then the modified peat adsorbent is being prepared. The adsorption capacity of original peat is improved, while the stability and the anti-hostile environment environmental capacity are strengthened. However still the obtained sorbent have mechanical properties common for peat and ability to absorb species due to interaction with functional groups common for peat - carboxylic groups.

There is known a method for removing radioactive substances from discharged waters in order to eliminate a toxic effect of heavy and radioactive metals (WO2005062314). Accord to the known method, removal of radioactive substances from liquid wastes and discharged waters is achieved by introducing a sorbing agent (embodied in the form of a peat, lignin or products of the modification thereof) into an electrochemical device ensuring directed movement of cations from cleanable solution to the sorbing agent. However also in this case the sorption can happen only due to functional groups present in the original sorbent matrix.

There is also known a method for recovery of uranium and heavy metal compounds from waters contaminated with radioactive elements by bonding with pre-treated activated carbon (DE19925601). The method represents a use of reactive wall approach for removal of radioactive uranium and heavy metal compounds from groundwater. The suggested sorbent is based on activated carbon, which finds use in water treatment and their sorption properties are optimized by pre-treatment of the active carbon with natural or technical chelants.

### Disclosure of the Invention

The aim of the invention is to synthesize sorbents for removal of radionuclides and toxic trace elements from water having improved properties compared to ones of the prior art. The aim is achieved by the offered method of covering natural biomaterial structure (being sorbents of radionuclides, heavy metals and metalloids or I to IV valent metal ions from waters), with layer of synthetic polymer containing functional groups increasing and/or modifying the sorption character in respect to substances to be removed. Said functional groups include cationic groups (-COOH, -SO₃H and others) as well as anionic (-NH₂, -N(CH₃)₃⁺) and other. Graftpolymerization ensures also introduction of a polymeric backbone adding hydrophobic sorption effect and consecutively improvement of the mechanical strength of the formed sorbent.

The synthesis procedure of the intended sorbents includes activation of the sorbent matrix by mild alkaline hydrolysis with hydroxides of alkaline elements. Sorbent synthesis is performed using graftpolymerization in nonaqueous solvents of alkenes containing at least one electron distracting group at double bond carbon (derivatives of acrylic or methacrylic acids) and functional group determining increase and/or modification in respect to radionuclides, heavy metals and metalloids or I to IV valent metal ion sorption. Sorbent synthesis is performed in presence of radical initiator and crosslinking agent with reactivity at radical polymerization reaction similar to that of monomer. The following radionuclide sorption take place batch wise or in column regime. Grafting helps to preserve high specific surface area of natural biomaterial or even to increase it and introduce additional functional groups supplementing groups already present in the existing sorbent matrix (e.g. carboxylgroup, sulphogroup and others) thus increasing sorption capacity or modifying the sorbing functionalities (secondary or ternary aminogroups, phosphogroups and others).

As matrix for synthesis of sorbents wide array of natural biomaterials can be used characterized with high specific surface area and presence of hydrophilic functional groups, like as high moor peat, low moor peat, straw, reeds sawdust and others.

### Brief Description of Drawings

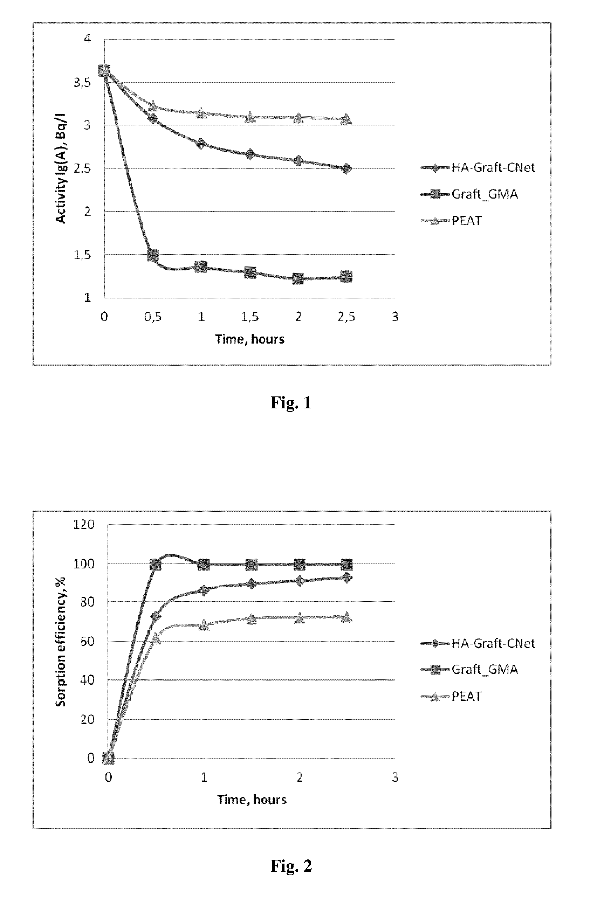

Fig. 1 shows ⁶³Ni radionuclide sorption curves on different sorbents.
Fig. 2 shows ⁶³Ni radionuclide sorption efficiency for different sorbents.

The offered method for synthesis of sorbents intended for removal of radionuclides and toxic trace elements from water, comprises: (i) providing a natural biomaterial having high specific surface area as sorbent matrix, comprising a hydrophilic functional group; (ii) adding a nonaqueous solvent of alkenes containing at least one electron distracting group at double bond carbon as monomers to said hydrophilic functional group, determining sorption of cationic and anionic element species in presence of radical initiator and crosslinking agent to form surface reactive group; (iii) reacting by free radical the surface reactive group with monomer to form a sorbent; (iv) separation of obtained sorbent. The monomer to sorbent matrix weight ratio is from 1:0.2 to 1:5.

As a matrix for synthesis of sorbents wide array of natural biomaterials characterized with high specific surface area (> 5 m²/g) and presence of hydrophilic functional groups (preferably carboxylic groups at concentration >5 mmol/g, but also hydroxylgroups) can be used. Said biomaterials include high moor peat, low moor peat, moss, straw, reeds, sawdust and others. An inherent property of the selected materials includes also sorption capacity in respect to substances of concern. All used natural biomaterials are low-cost materials of natural origin or even waste materials from processing and they are decomposing at elevated temperatures forming low volumes of ashes thus enabling following decrease of the final volume of solid radioactive wastes, the sorbing agent is reduced to ash after saturation with radionuclides, but the sorbent can be applied also as filler for reactive barriers.

### Examples of Implementation of the Invention

### Sorbent synthesis examples

### Example 1

10 of raised bog peat (decomposition degree H3, C 53.23, particle size < 2 mm) were treated with 500 ml of 0.1 N NaOH at 20 C for 24 hrs, with following filtration, washing with deionised water until removal of hydroxide ions, acetone and drying at 105 C. Activated peat were dispersed in 100 ml of dioxane and after purging with N₂ to remove O₂ 14.21 g (0.1 mol) of glycidyl methacrylate and 1.00 g of NN-methylene-bis-acrylamide were added in a solution of 10 ml of isopropanol. Afterwards radical polymerization initiator 1.00 g of benzoylperoxide solution in 10 ml of isopropanol was added. The mixture was stirred for 3 hrs at 100 C under reflux. After filtration, the residue was washed with isopropanol, ethanol, water and ethanol and dried at 70 C. Obtained: 12.78 g; C 57.21 %; N 2.4 %

### Example 2

10 of raised bog peat (decomposition degree H3, C 53.23, particle size < 2 mm) were treated with 500 ml of 0.1 N NaOH at 20 C for 24 hrs, with following filtration, washing with deionised water until removal of hydroxide ions, acetone and drying at 105 C. Activated peat were dispersed in 150 ml of dioxane and after purging with N₂ to remove O₂ 42.6 g (0.3 mol) of glycidyl methacrylate and 3.00 g of N,N-methylene-bis-acrylamide were added in a solution of 50 ml of dioxane. Afterwards radical polymerization initiator 2.00 g of benzoylperoxide solution in 20 ml of dioxane was added. The mixture was stirred for 3 hrs at 100 C under reflux. After filtration, the residue was washed with dioxane, ethanol, water and ethanol and dried at 70 C. Obtained: 13.23 g; C 56.34 %; N 3.5 %

### Example 3

10 of raised bog peat (decomposition degree H3, C 53.23, particle size < 2 mm) were treated with 500 ml of 0.1 N NaOH at 20 C for 24 hrs, with following filtration, washing with deionised water until removal of hydroxide ions, acetone and drying at 105 C. Activated peat were dispersed in 100 ml of dioxane and after purging with N₂ to remove O₂ 2.83 g (0.02 mol) of glycidyl methacrylate and 0.50 g of NN-methylene-bis-acrylamide were added in a solution of 10 ml of dioxane. Afterwards radical polymerization initiator 0.50 g of benzoylperoxide solution in 10 ml of dioxane was added. The mixture was stirred for 3 hrs at 100 C under reflux. After filtration, the residue was washed with dioxane, ethanol, water and ethanol and dried at 70 C. Obtained: 11.78 g; C 54.12 %; N 1.8 %

### Example 4

10 of low moor peat (decomposition degree H9, C 54.76, particle size < 2 mm) were treated with 500 ml of 0.1 N NaOH at 20 C for 24 hrs, with following filtration, washing with deionised water until removal of hydroxide ions, acetone and drying at 105 C. Activated peat were dispersed in 150 ml of isopropanol and after purging with N₂ to remove O₂ 20.7 g (0.1 mol) 2-acrylamido-2-rnethyl-1-propanesulfonic acid and 1.00 g of NN-methylene-bis-acrylamide were added in a solution of 10 ml of isopropanol. Afterwards radical polymerization initiator 1 g of benzoylperoxide solution in 10 ml of isopropanol was added. The mixture was stirred for 3 hrs at 70 C under reflux. After filtration, the residue was washed with isopropanol, ethanol, water and ethanol and dried at 70 C. Obtained: 13.46 g; C 55.32 %; S 1.8 %; total acidity 6.4 mmol/g

### Example 5

10 of finely cut (particle size < 20mm) rye straw (C 57.85) were treated with 500 ml of 0.1 N NaOH at 20 C for 24 hrs, with following filtration, washing with deionised water until removal of hydroxide ions, acetone and drying at 105 C. Activated straw were dispersed in 100 ml of benzene and after purging with N₂ to remove O₂ 10.36 g (0.05 mol) of 2-acrylamido-2-methyl-1-propanesulfonic acid and 0.50 g of N,N-methylene-bis-acrylamide were added in a solution of 10 ml of benzene. Afterwards radical polymerization initiator 1 g of 2,2'-azobis(2-methylpropionitrile) solution in 10 ml of benzene was added. The mixture was stirred for 3 hrs at 80 C under reflux. After filtration, the residue was washed with benzene, acetone and dried at 70 C. Obtained: 11.72 g; C 57.34 %; S 1.2 %; total acidity 2.8 mmol/g

### Example 6

15 g of birch tree sawdust were extracted with 3 portions of acetone (3 x 50 ml) to remove lipid soluble substances, dried and sieved through 2 mm sieve. 10 of cleaned sawdust were treated with 500 ml of 0.1 N NaOH at 20 C for 24 hrs, with following filtration, washing with deionised water until removal of hydroxide ions, acetone and drying at 105 C. Activated sawdust (C 51.48 %) were dispersed in 100 ml of benzene and after purging with N₂ to remove O₂ 10.36 g (0.05 mol) of 2- acrylamido-2-methyl-1-propanesulfonic acid and 1.00 g of di(ethylene glycol) diacrylate were added in a solution of 10 ml of benzene. Afterwards radical polymerization initiator 1 g of 2,2'-azobis(2-methylpropionitrile) solution in 10 ml of benzene was added. The mixture was stirred for 5 hrs at 80 C under reflux. After filtration, the residue was washed with benzene, acetone and dried at 70 C.
Obtained: 12.32 g; C 52.48 %

### Example 7

10 of raised bog peat (decomposition degree H3, C 53.23, particle size < 2 mm) were treated with 500 ml of 0.1 N NaOH at 20 C for 24 hrs, with following filtration, washing with deionised water until removal of hydroxide ions, acetone and drying at 105 C. Activated peat were dispersed in 100 ml of dimethylformamide and after purging with N₂ to remove O₂ 20.6 g (0.1 mol) of (3-acrylamidopropyl)trimethylammonium chloride solution in 20 ml of dimethylformamide and 1.00 g of NN-methylene-bis-acrylamide were added in a solution of 10 ml of dimethylformamide. Afterwards radical polymerization initiator 1 g of 2,2'-Azobis(2-methylpropionitrile) solution in 10 ml of dimethylformamide was added. The mixture was stirred for 2 hrs at 100 C under reflux. After filtration, the residue was washed with dimethylformamide, acetone and dried at 70 C. Obtained: 14.39 g; C 55.71 %; N 4.9 %

### Sorption examples

Sorption experiments were performed in stationary regime using facility FrioCell at temperature 20 °C ± 0.1 °C, using steering device. Radioactive solution was prepared from deionized water and solution of the ⁶³Ni radionuclide with total radioactivity 4.3-4.4 kBq/l. pH value was 3.0-4. The defined volume of radioactive solution was mixed with the corresponding amount of dry sorbent in the proportion range - solution: sorbent - 25: 0.5-1.0. Peat for sorption experiments was used after drying at 105 °C 24 hours, milling and fractionation with size 0.25 - 2.0 mm. Experiments were performed during several hours. The solution's samples were taken after 0.5 hours period, treated in centrifuge and measured, using liquid scintillation counter.

Experimental results for different sorbents are given in the table 1.

**Table 1.**

| ⁶³Ni radionuclide sorption parameters using different sorbents. | | | | | | | |
|---|---|---|---|---|---|---|---|
| No. | Time. hours | HA-Graft-CNet* | Sorption degree, % | Peat | Sorption degree, % | Graft_GMA** | Sorption degree, % |
| 1 | 0 | 4417 | 0 | 4403 | 0 | 4306 | 0 |
| 2 | 0.5 | 1209 | 72.6 | 1696 | 61.4 | 30 | 99.2 |
| 3 | 1.0 | 612 | 86.1 | 1388 | 68.4 | 22 | 99.4 |
| 4 | 1.5 | 458 | 89.6 | 1240 | 71.8 | 19 | 99.5 |
| 5 | 2.0 | 389 | 91.1 | 1224 | 72.1 | 16 | 99.6 |
| 6 | 2.5 | 315 | 92.8 | 1199 | 72.7 | 17 | 99.6 |

| | | | | | | | |
|---|---|---|---|---|---|---|---|
| *Peat grafted with acrylonitrile **Peat grafted with glicidylmethacrylate with following modification with trimethylammonio groups | | | | | | | |

It has been shown, that the sorbents HA-Graft-CNet and Graft_GMA absorb more than 20 % more in comparison with the peat samples. In the case of Graft_GMA, the sorption degree 99.2 % is reached during first 30 minutes of the experiments. It increases up to 99.6 % after sorption during 2.5 hours.

The obtained polymer is characterized with concentration of functional groups, surface area, scanning electron microphotographs, sorption capacity and other parameters. The graftpolymerization helps to improve mechanical strength of natural biomaterials thus improving operational parameters in column processes. At the same time the obtained materials are fully organic and they are decomposing at elevated temperatures yielding low volumes of ash. The following radionuclide, heavy metal, metalloid or non-metal sorption can take place batch wise or in column regime. For all studied sorbents the sorption capacity of the obtained sorbent exceeds that of original biomaterial.

## Claims

1. A method for synthesis of sorbents intended for removal of radionuclides and toxic trace elements from water, comprising:
(i) providing a natural biomaterial having high specific surface area as sorbent matrix, comprising a hydrophilic functional groups;
(ii) adding a nonaqueous solvent of alkenes containing at least one electron distracting group at double bond carbon as monomers to said hydrophilic functional group, determining sorption of cationic and anionic element species in presence of radical initiator and crosslinking agent to form surface reactive group;
(iii) reacting by free radical the surface reactive group with monomer to form a sorbent;
(iv) separation of obtained sorbent.

2. The method according to claim 1, wherein the sorbent matrix is selected from the group consisting of peat, straw, sawdust.

3. The method according to claim 1 or 2, wherein monomer to sorbent matrix weight ratio is from 1:0.2 to 1:5.

4. Sorbents intended for removal of radionuclides and toxic trace elements from water obtained according to any preceding claims.
